# EUROPEAN PATENT APPLICATION

(11) **EP 1 528 723 A1**
(43) Date of publication of application: **04.05.2005**
(21) Application number: 03425706.3
(22) Date of filing: 31.10.2003
(51) Int. Cl.: H04L 12/56

(54) **Method and apparatus for mass software download in mobile communication systems, and mobile communication system supporting the mass software download**

(71) Applicant: Siemens Mobile Communications S.p.A., 20126 Milano (IT)
(72) Inventor: Bossoli, Francesca, 50019 Sesto Fiorentino (FI) (IT); Micocci, Stefano, Dr., 40055 Castenaso (IT); Ravasio, Gianluca, Dr., 20052 Monza (IT)
(74) Representative: Giustini, Delio

(57) **Abstract**

Mass software download in a mobile communication system (100), in order to supply a plurality of terminals (TE; TEa....TEn) with the same software data, is performed as a multimedia broadcast/multicast service activated by the system (100) when software data to be mass downloaded become available. The apparatus comprises a download management unit (HRM; SRM; PRM1, PRM2) arranged to receive the software data to be downloaded from a service provider (101) and provided with storage units (DB1, DB2) for storing the software data and information about the class(es) of terminals to which the software is to be downloaded, and a multimedia broadcast/multicast service centre (BMSC), connected with said download management unit (HRM; SRM; PRM1, PRM2) and with a packet traffic entry node (GGSN) in the system (100). The service centre (BMSC) receives the software data and the information about the terminals, from said unit, to organises the software data according to a multimedia broadcast/multicast service protocol and manages service provision.

## Description

### Field of the Invention

The present invention refers to digital mobile communication systems, and more particularly it concerns a method of and an apparatus for mass software download (or mass terminal reconfiguration) in one such system, and a mobile communication system employing the method and the apparatus.

### Background of the Invention

Software download through wireless networks is becoming an important issue for mobile telecommunications industry and operators. Already in present mobile communication systems there is an increasing demand by the users for software download concerning ringing tones, screen savers, games and

Java midlets. Mobile communication systems of the third generation and beyond will make wide use of software download for upgrading or reconfiguring the user terminals.

Indeed, on the one side, the services offered by the new systems will presumably have a rapid evolution, so that downloading the specific software onto the user terminal will allow the user to access a new service without being compelled to buy a new terminal. On the other side, the future systems will be characterised by the coexistence of a plurality of radio access technologies such as cellular (of different generations, in particular 2nd and 3rd generation), cordless, wireless local area network (WLAN), broadcast systems, etc.: downloading the proper radio access software through the network when the terminal makes a vertical handover (i.e. passes from one radio access technology to another) could be a manner of providing the user with the multimode terminal needed in the new generation systems.

At present, from the user standpoint, a possibility for practically getting terminal reconfiguration (the term will be used throughout the specification as a synonym of software download, since adding or replacing a software piece in the terminal actually is a reconfiguration) could be visiting an authorised mobile phone shop or the terminal vendor's factory. This is however rather uncomfortable and time consuming.

Proposals exist for having the reconfiguration directly requested and performed by the users through their terminals. For instance, EP-A-1289324 discloses a system in which the user requests the software to the base station, which forwards the request to a control unit, such as the mobile switching centre MSC, the service GPRS (General Packet Radio Service) support node SGSN or the gateway GPRS support node GGSN. The control unit then instructs the base station to deliver the requested software to the user.

Another example is the so called "MS4501 OTA Software Upgrade Server" presented by NEC at the CEBIT meeting held in Hanover (Germany), 12 - 19 March 2003.

Yet, with the diffusion of software download services offered by mobile communication systems, mass upgrade situations could frequently occur, entailing the need to download the same software (e.g. a new release or a patch) to a defined number of terminals, in particular to all terminals of a given class or model.

Solutions providing for user-driven software download are not suitable for mass download. Simultaneous or almost simultaneous software download requests by a lot of users would entail a high occupancy of network and radio resources, which are to be allotted to each user. This is clearly detrimental to the quality of service of the network.

The need thus exists for different solutions that are comfortable for the user and that do not negatively affect the network operation.

The paper "End-to-end IP multicast for software upgrades of reconfigurable user terminals within IMT-2000/UMTS", by R. Rummler and A.H. Aghvami, presented at the 2002 IEEE International Conference on Communications, New York, NY, USA, 28 April - 2 May 2002, Conference Proceedings Vol. I, pp. 502 - 506, discloses a solution utilising the over-the-air software download in conjunction with IP (Internet Protocol) Multicast as the enabling technique. Download can be started by the user or by the network. As acknowledged by the authors, a solution based on the IP Multicast technique is not suitable for mass download: indeed, such technique does not allow for multiple subscribers to share radio or core network resources, and therefore it does not offer any advantage as to resource exploitation.

The invention aims at obviating the above drawbacks, by offering a method and a system in which mass download can be started by the network and a heavy and useless occupancy of core network and radio resources is avoided.

### Summary of the Invention

To achieve the above aims, the invention provides a method of performing a mass software download - or mass terminal reconfiguration - in a mobile communication system, in which the software data are delivered to the concerned terminals within a multimedia broadcast/multicast service activated by the system when software data to be mass downloaded become available, wherein signalling exchange required for the service management and software data delivery use a single link towards each concerned access network in the system and a common radio channel between an access network and all terminals concerned by the download and attached to said radio access network.

More particularly, the method comprises the steps of:
- configuring a multimedia broadcast/multicast service centre in order to support the mass software download service;
- configuring the terminals of users having subscribed the service so that they are capable of distinguishing the mass software download service from other multimedia broadcast/multicast services provided in the system;
- associating a download management unit with said service centre for storing in the system the software data to be downloaded and information about a class or classes of terminals to which the software is to be downloaded;
- communicating, by a software provider to said download management unit, the availability of software data to be downloaded to said plurality of terminals, and transferring said software data to said download management unit;
- passing said software data to said service centre together with the information about the class or classes of terminals to which the software data are to be downloaded, in order such data are organised according to a multimedia broadcast/multicast service protocol; and
- starting provision of the mass download service.

An apparatus for implementing the method comprises
- a download management unit arranged to communicate with a software provider to recognise the availability of software data to be mass downloaded and to receive therefrom such software data, said unit being associated with storage units for storing the received software data and information about a class or classes of terminals to which the software is to be downloaded, and
- a multimedia broadcast/multicast service centre, connected with said download management unit and with an entry node to the system for packet services, and arranged to receive from said unit the software data and the information about the class(es) of terminals to which the software is to be downloaded, to organise said software data according to a multimedia broadcast/multicast service protocol and to start service provision when said software data are available.

The invention also provides a system supporting a mass software download or terminal reconfiguration service. The system comprises:
- a download management unit arranged to communicate with a software provider in order to recognise the availability of software data to be mass downloaded and to receive from said provider such software data, said unit being connected with storage units for storing the software data to be downloaded and information about a class or classes of terminals to which the software is to be downloaded;
- a multimedia broadcast/multicast service centre connected with said download management unit and with an entry node to the system for packet services, and arranged to receive from said unit the software data and the information about the class(es) of terminals to which the software is to be downloaded, to organise said software data according to a multimedia broadcast/multicast service protocol and to start service provision when said software data are available, said service provision being managed by said multimedia broadcast/multicast service centre through a single link from said entry node (GGSN) towards each concerned access network in the system
- a plurality of terminals of users that have subscribed the service, said terminals being configured so that they are capable of distinguishing the mass software download service from other multimedia broadcast/ multicast services provided in the system and being arranged to receive the software data through a radio channel that is common to all terminals connected with an access network.

The invention has moved from a twofold consideration:
- on the one hand, 3GPP (3rd Generation Partnership Project) has specified in technical specifications 3GPP TS 22.146 and TS 23.246 a service, the Multimedia Broadcast/Multicast Service (MBMS), providing for the transmission of the same multimedia data, e.g. text, audio, picture, video) from a single source to several destinations (point-to-multipoint) in a specific area (the multicast/broadcast service area). The data can be transmitted to all users in the area (broadcast) or to (a) selected group(s) of users in the area (multicast). The essential features of the proposed service is that data are sent only once for each link between the SGSN and each radio access network, independently on the number of Node Bs and user equipments that have to receive the data, and that many users can receive the data over a common radio channel;
- on the other hand, the studies on the future wireless telecommunications networks have lead to a proposal for an IP-based architecture supporting reconfigurable terminals and managing reconfiguration in systems offering a wide range of wireless access technologies, as disclosed for instance in the paper "Architecture of IP based Network Elements Supporting Reconfigurable Terminals", presented at the IST Summit, Aveiro (Portugal), 15 - 18 June 2003.

The invention thus provides a method and a system that combine the IST IP-based reconfiguration mechanisms and architecture with the 3GPP point-to-multipoint mechanisms and architecture, thereby allowing saving network resources in case of mass download.

### Brief description of the drawings

The invention will be better understood from the following description of a preferred embodiment, with reference to the accompanying drawings in which:
- Fig. 1 is a simplified block diagram of the MBMS architecture specified by 3GPP;
- Fig. 2 is a simplified block diagram of a reconfiguration management system for an IP based network;
- Fig. 3 is a block diagram of a system employing the invention;
- Fig. 4 is a block diagram similar to Fig. 3 and showing the software download paths; and
- Fig. 5 is a diagram illustrating the method of the invention.

### Detailed description of the invention

Before describing in detail the invention, the essential features of the Multimedia Broadcast/Multicast Service (MBMS) and of the distributed reconfiguration management architecture mentioned in the introduction of the specification will be shortly recalled for facilitating the understanding of the invention.

Throughout the specification and the drawings, the units typical of any mobile communication system are labelled with their standard abbreviations. Moreover, the terminology used refers, by way of non-limitative example, to 3rd generation systems: the skilled in the art has however no problem in identifying equivalent units for different systems.

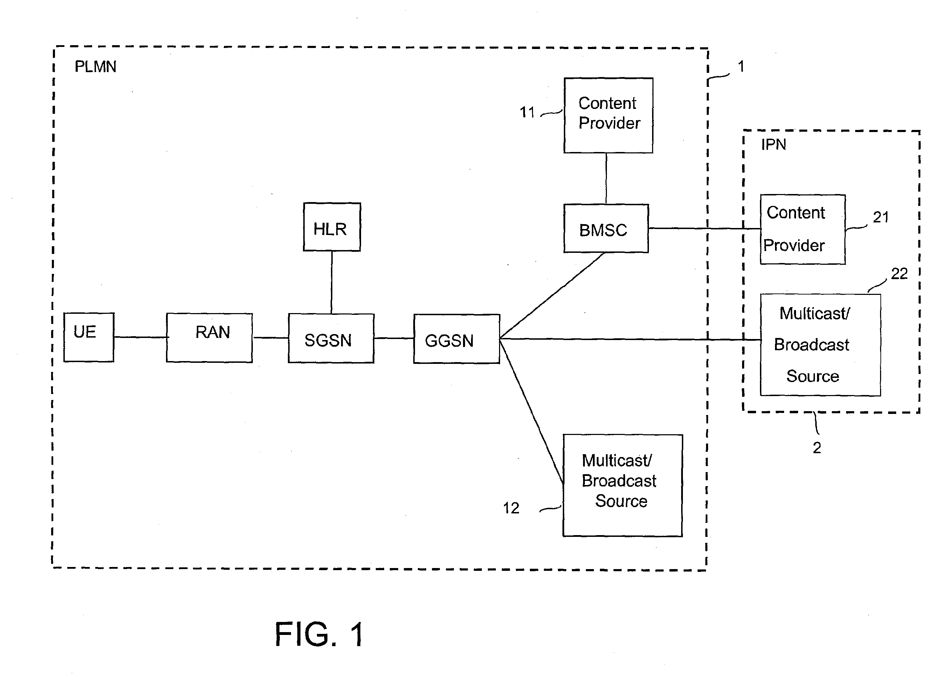

Fig. 1 schematically shows a mobile communication system 1 (or Public Land Mobile Network PLMN) offering the MBMS service. The data to be sent to the users can be provided by sources or providers 11, 12 within network 1 or by external sources or providers 21, 22 connected for instance to an external data network 2, e.g. an IP-based Network IPN.

For supporting Multimedia Broadcast/Multicast Services, system 1 uses user equipment UE (which in the case of interest for the present invention will be or include a reconfigurable terminal), the radio access network RAN, the home location register HLR and the serving and gateway GPRS support nodes SGSN, GGSN. Other units of the system, not concerned by the invention, are not shown for sake of simplicity. The system further comprises a service-specific entity, the Broadcast Multicast Service Centre BMSC, which is responsible for service provisioning and delivery. BMSC serves as an entry point for MBMS transmissions originated by content providers, like providers 11 and 21, which provide data over an IP network but do not implement the multicast protocol for data distribution: therefore, they need to rely on the server functions of BMSC. Among other tasks, BMSC can also provide the service announcements (i.e. information about the range of available services) and perform authentication procedures for contents provided by third parties.

GGSN serves as an entry point for MBMS data: such data, coming from BMSC or from multicast/broadcast sources like sources 12 and 22. GGSN duplicates the packets received from the source and forwards them to each SGSN that has a GTP (GPRS Tunnelling Protocol) tube established for a specific MBMS service, i.e. to those SGSNs that have requested to receive transmissions for the specific multicast service.

SGSN performs user individual network control functions (necessary only for multicast service mode), including charging, and provides its radio access networks like RAN with MBMS transmissions; moreover, it supports mobility procedures.

User equipment UE provides for the activation/deactivation of the MBMS service, and radio access network RAN is responsible for efficiently delivering the MBMS data to the designated multicast or broadcast service area;

Further details on the MBMS service and architecture, including the procedures for service provisioning, are not necessary here and can be found in the above-mentioned 3GPP technical specifications.

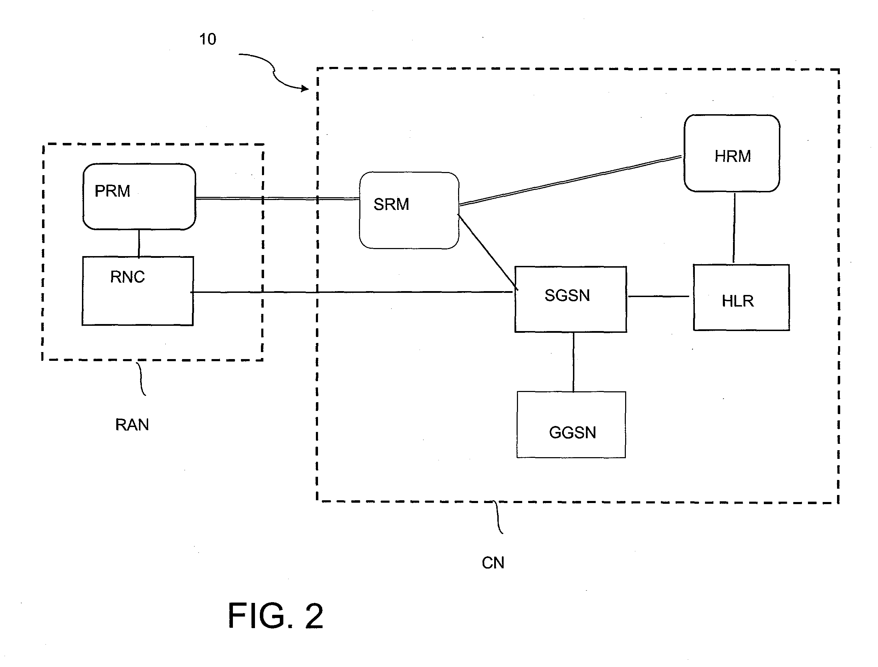

Reference is now made to Fig. 2, which shows a PLMN 10 where the so-called Core Network CN, i.e. the network part independent from the access technique, has been put into evidence and the conventional radio network control RNC has been explicitly indicated within RAN.

In order to support terminal reconfiguration and software download, radio access network RAN further comprises a Proxy Reconfiguration Manager PRM, which can be associated with or included into radio network control RNC and is the contact point for every terminal attached to RAN as far as reconfiguration is concerned. Core network CN is equipped with higher-level units SRM (Serving Reconfiguration Manager) and HRM (Home Reconfiguration Manager), which can be associated with or included in units SGSN and HLR, respectively. HRM thus belongs to the home network for a given user. Double lines indicate the communication paths among said units for reconfiguration signalling and software data.

Units PRM, SRM and HRM form a three-level hierarchical distributed structure, with HRM being the top level and PRM the bottom level. A unit HRM can be connected to several units SRM and a unit SRM can be connected to several units PRM. PRM receives software from upper level units and caches software to be frequently downloaded or intended to several terminals; PRM can also store part of the software accessible to the users. SRM stores software intended for all radio access networks of which the PRMs are connected to that SRM. HRM is informed of new software upgrades by external providers and stores also all of the software stored or cached at lower levels.

Further details on the reconfiguration managers can be found in the above-mentioned document of S. Micocci et al.

As said before, the MBMS service is provided through a single link for each RAN and through a common radio channel for each broadcast/multicast area including terminals attached to a same RAN. Thus, within the reconfiguration context, the application of the architecture supporting such service could be of particular interest for mass upgrade scenarios, where there is the necessity to download the same software (patch or protocol stack) to a great number of terminals. One example of this upgrade scenario could be the availability from the terminal vendor of a new patch (maybe a new release of operating system) to be provided to all terminals of a given model.

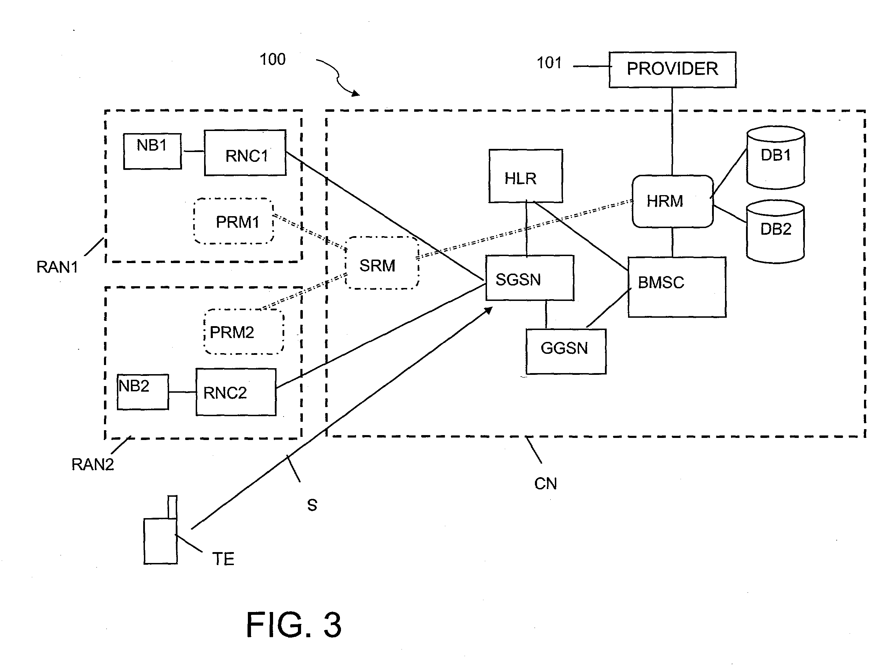

Fig. 3 shows a system 100 according to the invention, integrating the reconfiguration managing structure of Fig. 2 with the MBMS architecture of Fig. 1. The drawing shows two radio access networks RAN1, RAN2, with proxy reconfiguration managers PRM1, PRM2 and radio network controllers RNC1, RNC2. Also a Node B NB1 (NB2) for each radio access network and a terminal TE have been shown. For sake of simplicity of the drawing, the connections between the reconfiguration units and the mobile network units are no longer shown.

To achieve the integration, reconfiguration is considered as a new MBMS service, hereinafter referred to as "MBMS Reconfiguration Service", which relies on MBMS architecture and uses the multicast mechanism on the core network and a radio common data channel on radio access network. Thus, BMSC will be properly configured to support also that service, beside other MBMS services accessible through system 100. Terminal TE in turn will be configured so as to distinguish among the different MBMS services. The mass software upgrade typically is a multicast service.

Mass reconfiguration can be managed in centralised manner or in distributed manner.

In the centralised approach, BMSC is located in core network CN and only unit HRM at the top level in the hierarchical reconfiguration management architecture is involved in the mass software download, for storing the software and supplying it to BMSC. Moreover, HRM stores or has access to information (terminal profiles) allowing identifying the terminals which need to receive a certain software. The software is provided by a provider 101, which by way of example is shown outside the system 100. In case of distributed approach, BMSC is located in the core network or in radio access network, and SRM or PRM, respectively, are involved in download and store or have access to the terminal profiles and stroe the software.

Further aspects of the two solutions will be discussed below. It can be already stated that the centralised management seems the most suitable solution, since mass reconfiguration is a typical situation where the software could be available only in the core network, at the HRM, because it is realistic that this kind of software will be downloaded on a particular group of terminals only once. Moreover no time constraints should exist, so involving units PRMi for the download process seems not necessary.

The description of Fig. 3 refers to the centralised approach. Even if in this case HRM only is concerned, the drawing still shows units SRM and PRMi (i = 1, 2), which could be involved in reconfiguration aspects other than the mass download.

HRM interacts with BMSC in order to provide it with the contents to be downloaded and with further information on the terminals, in particular in order to identify which of them should host the new software (Terminal Profile). Thus, HRM will be associated with two memory units or data bases DB1, DB2 one of which stores the terminal profiles and the other is the repository for the software to be downloaded.

It is to be pointed out that the work done so far inside 3GPP defines as mandatory the user subscription to the MBMS service before any service access permission. This subscription information could be stored in HLR and should also be available to the server that is in charge of the authentication of a specific MBMS service (for instance, BMSC). HLR stores general subscription information: HRL checks whether the user is allowed to received data in MBMS modality. BMSC stores specific service subscription data and checks whether the user is subscribed to MBMS Reconfiguration Service. The need for the subscription is schematised in Fig. 3 by arrow S leading from terminal TE to SGSN. The terminals of the users having subscribed the service will be configured so as to recognise the service and automatically respond to the authorisation procedures.

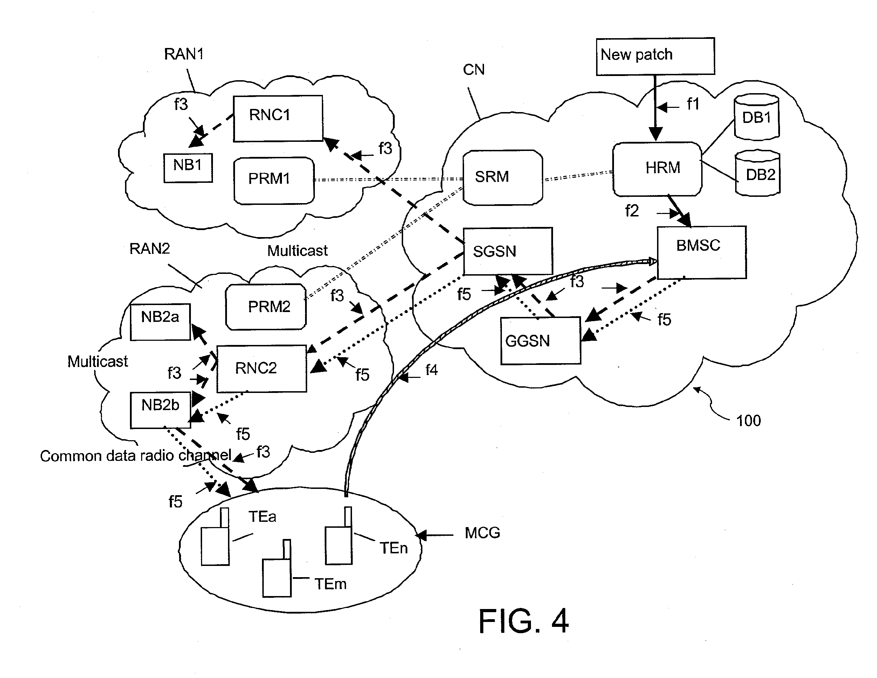

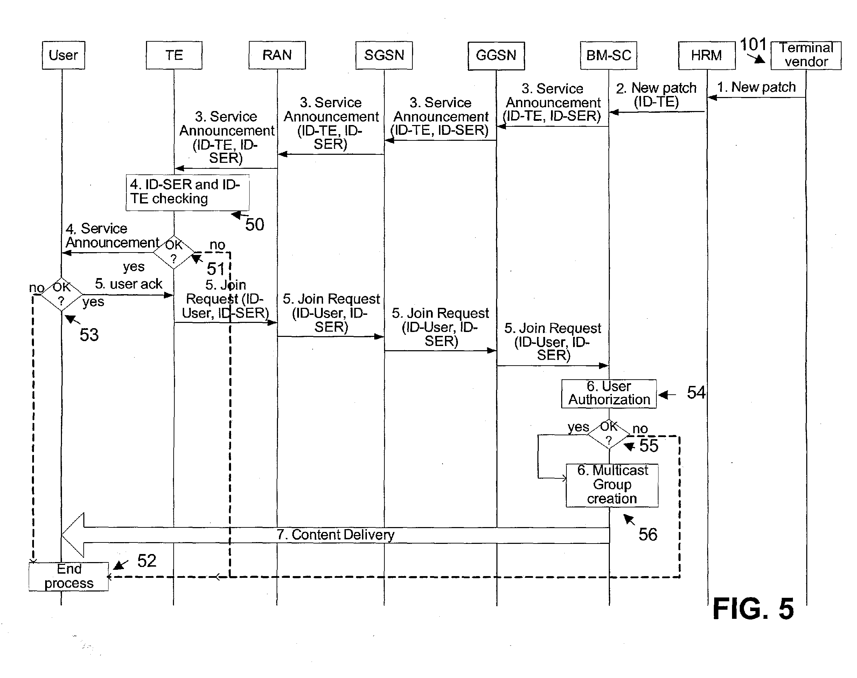

Hereinafter, the mass download method in the system of the invention will be described in more detail, referring also to Fig. 4, which shows the information flow during download, and to Fig. 5. In Fig. 4, two Node Bs units NB2a, NB2b are shown for RAN2, and it is assumed that the mass download concerns a group of terminals TEa...TEm...TEn that access the system through NB2b.

When a terminal vendor or provider 101 has a new patch from or a new release of operating system available, HRM is informed and the MBMS Reconfiguration service can be triggered. The terminals that are the target of the download are identified by the information stored in the Terminal Profile (data base DB1). It is interesting to note that no information about the terminal capabilities is stored in the HLR or in the BMSC, such information being present only in HRM.

As a first step, terminal vendor 101 provides HRM with a new patch to download, e.g. a new operating service release (arrow f1 in Fig. 4), which is stored in DB2. HRM, using the terminal profile information, determines the target terminal class or classes (ID-TE) related to the patch. HRM has no information regarding MBMS service subscriptions, that information being available in HLR and BMSC, as specified before. HRM, upon receipt of the software, interacts with BMSC (arrow f2) to inform it that a new patch is available for terminals belonging to class ID-TE and to supply the patch to BMSC. BMSC then starts the procedures for the actual service provision.

BMSC broadcasts a Service Announcement (arrows f3) towards the terminals through GGSN, SGSN and the various RANs, to supply the users with information about the service, with parameters required for the service activation and possibly with other service-related parameters. In particular, the announcement message must indicate the class or identity (ID-SER) of the MBMS Service, in the present case a mass reconfiguration, and the class of terminal ID-TE.

The announcement has to allow the concerned users to start the so-called "joining" procedure. As known, joining is the process by which a subscriber joins (becomes a member of) a multicast group, i.e. he/she indicates to the network that he/she is willing to receive the data of a specific service.

In order to allow a user to perform joining procedure, two constraints have to be fulfilled:
- the user shall be a subscriber to the MBMS Reconfiguration Service: it is supposed that, during subscription, the terminal is properly configured so that it is able to distinguish between different MBMS Services and recognise the mass download or reconfiguration service;
- the terminal shall belong to the target terminal class; the terminal itself is able to check whether its terminal class matches the ID-TE received from the network or not.

These two conditions are automatically verified within the terminal (step 50 in fig. 5). Only the terminals that satisfy both conditions (output "yes" of decision step 51) prompt the service announcement to the users. Thus, users that are not subscribers of the service are not annoyed by messages that do not concern them.

In case a terminal does not satisfy both conditions, the process for that terminal ends (step 52). Upon receipt of the announcement, the user decides whether he/she is willing to receive the software (step 53). In the negative, the process ends. In the affirmative (output yes, "user ack") the terminal performs the joining request. In Fig. 4, only the terminals TEa...TEm...TEn having accepted the software are shown. The joining request message includes the user identity (ID-User) and the service identity ID-SER. The joining request is denoted by double-line arrow f4 in Fig. 4 and is propagated along the network, by following the reverse path of the service announcement. However, for sake of simplicity, arrow f4 is shown in the drawing as directly leading from terminals TEa...TEn to BMSC.

BMSC checks whether the users that have requested the joining are subscribers of the MBMS Reconfiguration Service (authorisation, step 54 in fig. 5) and in the affirmative (output yes of step 55) a multicast group MCG (Fig. 4) is created identifying the users - i.e. terminals TEa...TEm...TEn - authenticated with success (step 56 in fig. 5). A timeout mechanism could be envisaged to manage the multicast group creation. In case the authorisation for a user fails, the process ends.

The contents are then downloaded from BMSC towards multicast group MCG (dotted line arrows f5). Of course, since it has been assumed that multicast group MCG is in the area served by NB2b, only a multicast link from SGSN to RNC2 and NB2 and a common radio channel from NB2 to MCG are necessary. Of course, data transfer could take place in several sessions. When the download has been completed, the resources are released.

The method of the invention implies some increase in signalling exchange between the network elements and the definition of a new interface on HRM for the dialogue with BMSC. Yet, it introduces the following benefits:
- in the core network there is a dramatic reduction of signalling and data traffic, because only one GTP-C and GTP-U tube for each MBMS service is required instead of one GTP-C tube and GTP-U for each user (C and U refer as usual to the control plane and the user plane of the communication protocol);
- in the core network the interface between SGSN and RNC (Iu-ps) bears only one connection for each multicast group towards each RNC, instead of one connection for each user;
- in the radio access network a common data channel bears the traffic data towards the user belonging the same multicast group.

The operation described above refers to a centralised approach, where only the top level HRM of the reconfiguration manager hierarchy is involved. Nevertheless, the proposed solution is perfectly scalable, i.e. applicable also in distributed scenarios. In this case also reconfiguration managers at lower levels of the hierarchy shown in Fig. 2 are involved.

For instance, when BMSC is located at SRM level, download could be managed by SRM itself, which is then associated with data bases DB1, DB2. The procedure would be exactly the same as above, with the difference that the content provider 101 shall deliver new patches to SRM via HRM, and SRM interacts with BMSC as HRM does in the centralised case. SRM is involved also if the download of the software is required when the user is in roaming on another network supporting the reconfiguration architecture shown in Fig. 2 and the MBMS reconfiguration service. In this case, unit SRM in the visited network interacts with HRM and BMSC in the home network, since the information about that terminal are present in its home network only.

In case BM-SC is located in a radio access network like RAN or RAN2, the involved element in the reconfiguration architecture would be the Proxy Reconfiguration Manager PRM1 or PRM2, which will be associated with data bases DB1, DB2 and receives the software through HRM and SRM.

Note that, when a SRM or a PRM is involved, the software provided by provider 101 could also be stored at the upper levels of the download management hierarchy.

The centralised solution requires a somewhat heavier signalling in CN, but it allows covering a wider service area, which could be equal to the coverage of the mobile network operator (MNO) or even of several operators, in case several operators provide the MBMS Reconfiguration Service and allow roaming.

The distributed solution reduces core network signalling, and minimises it if download is managed at the access network level, but the service area is limited to the coverage area of an SRM (the so-called Terminal Reconfiguration Serving Area) or to the coverage area of a radio access network. Moreover roaming is not supported.

In general, however, given the characteristics of the mass download, the centralised approach seems to be the best solution, as said also before. The centralised procedure ensures advantages to both the content provider and the end user. For the provider, content delivery is ensured over a wider area, i. e. coverage of one or more mobile network operators. As to the user, the terminal software upgrade is available over a number of RANs, also belonging to different MNOs, so that the user shall freely roam without losing the access to the MBMS Reconfiguration Service.

It is also to be appreciated that, since mass software download reconfiguration is organised as an MBMS service, all features envisaged for such services can be exploited, even if they are not explicitly disclosed here.

It is evident that the above description has been given only by way of non limiting example, and that changes and modifications are possible without departing from the scope of the invention.

## Claims

**1.** A method of performing a mass software download and mass terminal reconfiguration in a mobile communication system, in order to supply a plurality of terminals (TE; TEa....TEn) with the same software data, **characterised in that** said software data are delivered to said terminals (TE; TEa...TEn) within a multimedia broadcast/multicast service activated by the system (100) when software data to be mass downloaded become available, wherein signalling exchange required within the system (100) for managing said service and software data delivery use a single link towards each concerned radio access network (RAN1, RAN2) in the system (100) and a common radio channel between a radio access network (RAN1) and all terminals concerned by the download and attached to said radio access network.

**2.** The method according to claim 1, **characterised in that** it comprises the steps of:
- configuring a multimedia broadcast/multicast service centre (BMSC) in order to support the mass software download service;
- configuring the terminals (TE; TEa....TEn) of users having subscribed the service so that they are capable of distinguishing the mass software download service from other multimedia broadcast/multicast services provided in the system (100);
- associating a download management unit (HRM; SRM; PRM1, PRM2) with said service centre (BMSC) for storing in the system (100) the software data to be downloaded and information about a class or classes of terminals to which the software is to be downloaded,
- communicating, by a software provider (101) to said download management unit (HRM), the availability of software data to be downloaded to said plurality of terminals; and transferring said software data to said download management unit (HRM),
- passing said software data to said service centre (BMSC) together with the information about the class or classes of terminals to which the software data are to be downloaded, in order such data are organised according to a multimedia broadcast/multicast service protocol; and
- starting provision of the mass download service.

**3.** The method according to claim 1 or 2, **characterised in that** information about users having subscribed the mass download service are made available to said service centre (BMSC);

**4.** The method according to any preceding claim, **characterised in that** said mass download service provision comprises the steps of:
- broadcasting, from said service centre (BMSC) towards the terminals (TE; TEa....TEn), of a service announcement message including said information about the class or classes of terminals as well as information specifying that the service is the mass software download service;
- checking, at the terminals receiving said announcement, whether they belong to the or a class concerned by the download and are enabled to the service, and prompting, in the affirmative, the announcement message to the user for requesting acceptance of the software data download;
- communicating, by enabled terminals of said class(es) to said service centre (BMSC), the acceptance of the software data download by the respective users;
- checking, at said service centre (BMSC), whether the accepting users are subscribers to the service;
- creating a multicast group (MCG) including the terminals (TEa....TEn) of all accepting subscribers;
- delivering the software data to the terminals (TEa....TEn) in said multicast group (MCG).

**5.** The method according to claim 4, **characterised in that** a timeout mechanism is established for the creation of the multicast group (MCG).

**6.** The method according to any preceding claim, wherein a hierarchically arranged download management structure (HRM, SRM, PRM1, PRM2) is distributed across the system (100), **characterised in that** the association between a download management unit (HRM; SRM; PRM1, PRM2) with said service centre (BMSC) concerns a top level management unit (HRM), belonging to the home network for the terminals.

**5.** The method according to any of claims 1 to 3, wherein a hierarchically arranged download management architecture (HRM, SRM, PRM1, PRM2) is distributed across the system (100), **characterised in that** the association between a download management unit (HRM; SRM; PRM1, PRM2) with said service centre (BMSC) concerns an intermediate level management unit (SRM) associated with means (SGSN) controlling packet services in the system (100) or a bottom level management unit (PRM1, PRM2) associated with an access network (RAN1, RAN2), depending on the location of said service centre (BMSC) within the system (100).

**6.** The method according to claim 5, **characterised in that** the software data to be downloaded are received by the top level management unit (HRM) and are transferred therefrom to the unit (SRM; PRM1, PRM2) associated with the service centre (BMSC), through intervening levels, if any, of the hierarchical arranged download management architecture.

**7.** An apparatus for performing a mass software download and mass terminal reconfiguration in a mobile communication system (100), to supply a plurality of terminals (TE; TEa....TEn) with the same software data, **characterised in that** it comprises:
- a download management unit (HRM; SRM; PRM1, PRM2) arranged to communicate with a software provider (101) to recognise the availability of software data to be mass downloaded and to receive therefrom such software data, said unit being connected with storage units (DB1, DB2) for storing the received software data and information about a class or classes of terminals to which the software is to be downloaded, and
- a multimedia broadcast/multicast service centre (BMSC) connected with said download management unit (HRM; SRM; PRM1, PRM2) and connected with an entry node (GGSN) for packet traffic in the system (100), and arranged to receive from said unit the software data and the information about the class(es) of terminals to which the software is to be downloaded, to organise said software data according to a multimedia broadcast/multicast service protocol and to start service provision when said software data are available.

**8.** The apparatus according to claim 7, **characterised in that** the download management unit (HRM) and the service centre (BMSC) are centralised so as to offer the mass download service over an area which is at least equal to the coverage area of a mobile system operator.

**9.** The apparatus according to claim 8, **characterised in that** the download management unit (SRM) and the service centre (BMSC) are located in a part (CN) of the system (100) independent of the radio access technique.

**10.** The apparatus according to claim 8, **characterised in that** the download management unit (PRM1, PRM2) and the service centre (BMSC) are located in a part (RAN1, RAN2) of the system (100) specific for a radio access technique.

**11.** The apparatus according to claim 9 or 10, **characterised in that** the download management unit (SRM, PRM1, PRM2) belongs to an intermediate or a bottom level of a hierarchically arranged download management architecture (HRM, SRM, PRM1, PRM2) distributed across the system (100) and is arranged to communicate with the software provider (101) through download management units (HRM; HRM, SRM) at higher hierarchical levels, up to a top level unit (HRM) directly connected with the software provider (101).

**12.** A mobile communication system (100) offering a mass software download and mass terminal reconfiguration service, **characterised in that** it comprises:
- a download management unit (HRM; SRM; PRM1, PRM2) arranged to communicate with a software provider (101) in order to recognise the availability of software data to be mass downloaded and to receive therefrom such software data, said unit being connected with storage units (DB1, DB2) for storing the received software data and information about a class or classes of terminals to which the software is to be downloaded;
- a multimedia broadcast/multicast service centre (BMSC) connected with said download management unit (HRM; SRM; PRM1, PRM2) and with an entry node (GGSN) to the system (100) for packet services, and arranged to receive the software data and the information about the class(es) of terminals to which the software is to be downloaded from said download management unit (HRM; SRM; PRM1, PRM2), to organise said software data according to a multimedia broadcast/multicast service protocol and to start service provision when said software data are available, said service provision being managed by said multimedia broadcast/multicast service centre (BMSC) through a single link from said entry node (GGSN) towards each concerned access network (RAN1, RAN2) in the system (100);
- a plurality of terminals (TE; TEa....TEn) of users that have subscribed the service, said terminals (TE; TEa....TEn) being configured so that they are capable of distinguishing the mass software download service from other multimedia broadcast/multicast services provided in the system (100) and being arranged to receive the software data through a radio channel that is common to all terminals connected with an access network (RAN1, RAN2).

**13.** The system (100) according to claim 12, including a hierarchically arranged download management structure (HRM, SRM, PRM1, PRM2) distributed across the system (100), **characterised in that** the download management unit (HRM; SRM; PRM1, PRM2) associated with said service centre (BMSC) is a top level management unit (HRM), belonging to the home network for the terminals.

**14.** The system (100) according to claim 12, including a hierarchically arranged download management architecture (HRM, SRM, PRM1, PRM2) distributed across the system (100), **characterised in that** said service centre (BMSC) is located within a core network (CN) of the system (100) and the download management unit (HRM; SRM; PRM1, PRM2) associated with said service centre (BMSC) is an intermediate level management unit (SRM) associated with means (SGSN) controlling packet services in the system (100).

**15.** The system (100) according to claim 12, including a hierarchically arranged download management architecture (HRM, SRM, PRM1, PRM2) distributed across the system (100), **characterised in that** said service centre (BMSC) is located within a radio access network (RAN1, RAN2) of the system (100), and the download management unit (HRM; SRM; PRM1, PRM2) associated with said service centre (BMSC) is a bottom level management unit (PRM1, PRM2) associated with said radio access network (RAN1, RAN2).
